**Europäisches Patentamt**

**European Patent Office**

**Office européen des brevets**

(19)

(11) Veröffentlichungsnummer : **0 248 903 B1**

(12)    # EUROPÄISCHE PATENTSCHRIFT

(45) Veröffentlichungstag der Patentschrift :
**17.04.91 Patentblatt 91/16**

(51) Int. Cl.⁵ : **G01V 9/04,** G06K 7/10,
G11B 15/18

(21) Anmeldenummer : **87903536.8**

(22) Anmeldetag : **04.12.86**

(86) Internationale Anmeldenummer :
**PCT/EP86/00708**

(87) Internationale Veröffentlichungsnummer :
**WO 87/03700 18.06.87 Gazette 87/13**

(54) VERFAHREN UND SCHALTUNGSANORDNUNG ZUR KOMPENSATION VON ÄNDERUNGEN DER PARAMETER EINES OPTISCHEN SENDERS UND EINES OPTISCHEN EMPFÄNGERS IN EINEM OPTISCHEN ABTASTER.

(30) Priorität : **11.12.85 DE 3543666**

(43) Veröffentlichungstag der Anmeldung :
**16.12.87 Patentblatt 87/51**

(45) Bekanntmachung des Hinweises auf die
Patenterteilung :
**17.04.91 Patentblatt 91/16**

(84) Benannte Vertragsstaaten :
**AT BE CH DE FR GB IT LI LU NL SE**

(56) Entgegenhaltungen :
DE-A- 2 142 988
GB-A- 1 174 678
US-A- 3 436 553
Patent Abstracts of Japan, Band 6, Nr. 104,
(P-122)(982) 15. Juni 1982 & JP, A, 5736366

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **GLEIM, Günter**
**Terra Wohnpark 8**
**W-7730 VS-Villingen 24 (DE)**

## Beschreibung

Die Erfindung betrifft ein Verfahren und eine Shaltungsanordnung zur Kompensation von Änderungen der Parameter eines optischen Senders und eines optischen Empfängers in einem optischen Abtaster, der unterschiedliche Helligkeiten detektiert und bei dem der optische Empfänger Licht vom optischen Sender empfängt.

Optische Abtaster werden z.B. bei Lichtschranken oder Reflexkopplern verwendet.

In AEG-Telefunken, Reflexkoppler CNY 70, Halbleiterinformationsdienst 7.81 sind Reflexkoppler beschrieben.

Bei Reflexkopplern wird Licht von einem optischen Sender auf ein Objekt gestrahlt, welches das Licht auf einen optischen Empfänger reflektiert. Mit dem Reflexkoppler kann z.B. festgestellt werden, ob sich das Objekt bewegt, dreht, seine Postition wechselt oder sein Reflexionsvermögen ändert. In der Tabelle 1 auf Seite 2 der genannten Literaturstelle sind einige Anwendungsbeispiele für Reflexkoppler angeführt. Bei der Farberkennung oder bei einer Markierungsabtastung muß der Reflexkoppler verschiedene Helligkeiten unterscheiden können, weil das Objekt sein Reflexionsvermögen ändert. Das gleiche Problem tritt bei einer Lichtschranke auf, bei der sich der optische Sender und der optische Empfänger unmittelbar gegenüberliegen, wenn zwischen dem optischen Sender und dem optischen Empfänger lichtdurchlässige Objekte geschoben werden, die das Licht unterschiedlich stark dämpfen. Um z.B. die unterschiedlichen Graustufen eines Filters, das zwischen dem optischen Sender und dem optischen Empfänger durchgeschoben wird, auswerten zu können, muß der optische Empfänger bei jeder Graustufe ein anderes Signal abgeben, so daß die verschiedenen Graustufen des Filters anhand verschiedener Ausgangssignale unterscheidbar sind. Bei gleichen Graustufen soll stets das gleiche Ausgangssignal abgegeben werden, damit die Auswertung reversibel ist.

Die Forderung nach Reversibilität lässt sich bei einer einfachen Anordnung aus einem optischen Sender und einem optischen Empfänger nicht verwirklichen, weil die Parameter des optischen Senders und des optischen Empfängers durch Temperaturschwankungen und durch Alterung verändert werden : Bei dem angenommenen Beispiel bewirken deshalb gleiche Graustufen nicht wie gewünscht immer gleiche Ausgangssignale beim optischen Empfänger. Eine genaue Auswertung verschiedener Helligkeiten oder Graustufen ist mit einem optischen Sender und einem optischen Empfänger allein infolge Temperaturschwankungen und infolge Alterung der Bauteile nicht möglich.

Es ist daher Aufgabe der Erfindung, ein Verfahren für einen optischen Abtaster anzugeben, das Änderungen der Parameter des optischen Senders und des optischen Empfängers infolge Temperaturschwankungen und infolge Alterung der Bauteile kompensiert.

Die Erfindung löst diese Aufgabe gemäß Anspruch 1 dadurch, daß die Ausgangsspannung des optischen Empfängers, die von der empfangenen Lichtenergie abhängig ist, mit einer Referenzspannung verglichen wird und daß zur Einstellung der Versorgungsspannung des optischen Senders die Ausgangsspannung des optischen Empfängers auf die Referenzspannung geklemmt wird, wenn die vom optischen Empfänger empfangene Lichtenergie einen Extremwert annimmt. Des weiterer ist die Erfindung mit einer Schaltungsanordnung zur Durchführung des Verfahrens nach Anspruch 2 bzw. 3 befaßt.

Es zeigen die

Figur 1 eine Schaltungsanordnung zur Durchführung des Verfahrens nach Anspruch 2,

Figur 2 die Ausgangsspannung $U_A$ in Abhängigkeit von den Grauwerten eines Filters F,

Figur 3 eine Schaltungsanordnung zur Durchführung des Verfahrens nach Anspruch 3,

Figur 4 die Ausgangsspannung $U_A$ in Abhängigkeit von den Grauwerten eines Filters F.

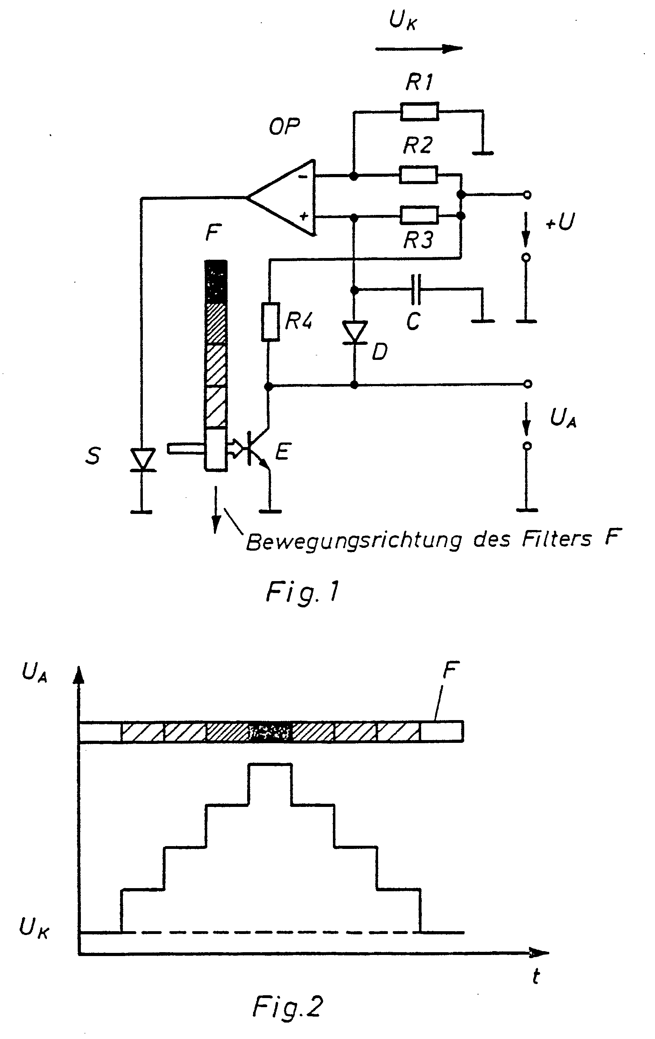

In Figur 1 ist der Ausgang eines Operationsverstärkers OP mit der Anode einer als optischen Sender vorgesehenen Leuchtdiode S verbunden, deren Kathode auf Bezugspotential liegt. Der invertierende Eingang des Operationsverstärkers OP liegt über einen ersten Widerstand R1 auf Bezugspotential und über einem zweiten Widerstand R2 an einer Spannung +U. Der nichtinvertierende Eingang des Operationsverstärkers OP liegt über einen dritten Widerstand R3 an der Spannung +U und über eine Kapazität C auf Bezugspotential. Ausserdem ist der nichtirvertierende Eingang des Operationsverstärkers OP mit der Anode einer Diode D verbunden, deren Kathode über einem vierten Widerstand R4 an der Spannung +U liegt und mit dem Kollektor eines als optischen Empfänger vorgesehenen Phototransistors E verbunden ist. Der Emitter des Phototransistors E liegt auf Bezugspotential. Die Ausgangsspannung $U_A$ wird am Kollektor des Phototransistors E abgegriffen.

Anhand des in Figur 2 gezeigten Diagramms wird die Schaltungsanordnung aus Figur 1 nun erläutert.

In Figur 2 ist die Ausgangsspannung $U_A$, die am Kollektor des Phototransistors E abgegriffen wird, in Abhängigkeit von den Grauwerten eines Filters F aufgetragen.

Zum leichteren Verständnis der Schaltungsanordnung aus Figur 1 sei angenommen, daß zuerst die Stufe des Filters F, die das Licht am wenigsten dämpft, zwischen der Leuchtdiode S und dem Phototransistor E liegt. Wegen dem Spannungsteiler aus dem ersten Widerstand R1 und dem zweiten Widerstand R2 hat das Potential am invertierenden Eingang des Operationsverstärkers OP einen festen Wert. Die dadurch bedingte konstante Spannung zwischen dem invertierenden Eingang des Operationsverstärkers OP und Bezugspotential wird im weiteren Verlauf als Klemmspannung $U_K$ bezeichnet. Der Operationsverstärker OP ändert nun seine Ausgangsspannung und damit auch die Sendeleistung der Leuchtdiode S so lange, bis die Spannung zwischen seinen beiden Eingängen null wird. Weil dann beide Eingänge des Operationsverstärkers OP auf gleichem Potential liegen, fällt an der Kapazität C ebenso wie am ersten Widerstand R1 die Klemmspannung $U_K$ ab. Unter der Annahme, daß es sich bei der Diode D um eine ideale Diode handelt, nimmt die Ausgangsspannung $U_A$ am Kollektor des Phototransistors E den Wert der Klemmspannung $U_K$ an, denn der Operationsverstärker OP ändert – wie bereits erwähnt – seine Ausgangsspannung und damit auch die Sendeleistung der Leuchtdiode S so lange, bis der Widerstand des Phototransistors E genau den Wert annimmt, bei dem an der Kollektor-Emitter-Strecke die Klemmspannung $U_K$ abfällt. Der Kollektor des Phototransistors E sowie der invertierende als auch der nichtinvertierende Eingang des Operationsverstärkers OP liegen jetzt alle auf gleichem Potential, vorausgesetzt die Diode D ist ein ideales Bauteil. In Wirklichkeit wird die Spannung an der Kollektor-Emitter-Strecke des Phototransistors E jedoch um die Diodenspannung kleiner sein als die Klemmspannung $U_K$.

Wird nun das Filter F zwischen der Leuchtdiode S und dem Phototransistor E so durchgeschoben, daß von Stufe zu Stufe des Filters F die Dämpfung zunimmt, so nimmt der Widerstand des Phototransistors E ebenfalls zu. Weil dadurch das Potential am Kollektor des Phototransistors E positiv gegenüber dem Potential an der Anode der Diode D wird, sperrt die Diode D. Bei gesperrter Diode D kann aber der Operationsverstärker OP seine Ausgangsspannung nicht ändern, weil seine beiden Eingänge auf gleichem Potential liegen oder – mit anderen Worten ausgedrückt – weil sowohl am ersten Widerstand R1 als auch an der Kapazität C die Klemmspannung $U_K$ abfällt. Deshalb nimmt die Ausgangsspannung $U_A$, wie in Figur 2 gezeigt ist, stufenförmig zu, wenn die Dämpfung des Filters F ebenfalls in Stufen zunimmt. Wird das Filter F in entgegengesetzter Richtung, das heißt von der Stufe höchster Dämpfung zur Stufe geringster Dämpfung zwischen der Leuchtdiode S und dem Phototransistor E geschoben, so wird die in Figur 2 gezeigte Treppenkurve in entgegengesetzter Richtung durchlaufen : Die Ausgangsspannung $U_A$ nimmt stufenförmig ab, bis sie, wenn wieder die Stufe des Filters F mit der geringsten Dämpfung zwischen der Leuchtdiode D und dem Phototransistor E liegt, auf die Klemmspannung $U_K$ abgesunken ist.

Bei der in Figur 1 gezeigten Schaltungsanordnung wird stets auf die Stufe des Filters mit der geringsten Dämpfung, das heißt auf den hellsten Wert geklemmt. Wird z.B. das Filter um eine Stufe mit noch geringerer Dämpfung erweitert und wird diese Stufe zwischen die Leuchtdiode S und den Phototransistor E geschoben, so nimmt der Widerstand des Phototransistors E ab. Weil durch diese Abnahme das Potential an seinem Kollektor negativ gegenüber dem Potential an der Anode der Diode D wird, wird die Diode D leitend. Das Potential am nichtinvertierenden Eingang des Operationsverstärkers OP sinkt, denn die Kapazität C wird nun über die Diode D entladen. Die an der Kapazität C abfallende Spannung sinkt unter die Klemmspannung $U_K$ ab, während am ersten Widerstand R1 weiterhin die Klemmspannung $U_K$ abfällt. Der Operationsverstärker OP regelt sofort diesen Zustand unterschiedlicher Spannungen am ersten Widerstand R1 und an der Kapazität C aus, indem er seine Ausgangsspannung verringert, so daß die Leuchtdiode S weniger Licht auf den Phototransistor E strahlt. Die Lichtleistung der Leuchtdiode S wird so lange verringert, bis der Widerstand des Phototransistors E wieder den Wert annimmt, bei dem an der Kollektor-Emitter-Strecke die Klemmspannung $U_K$ abfällt. In diesem stabilen Zustand liegen der Kollektor des Phototransistors E sowie die beiden Eingänge des Operationsverstärkers OP auf gleichem Potential.

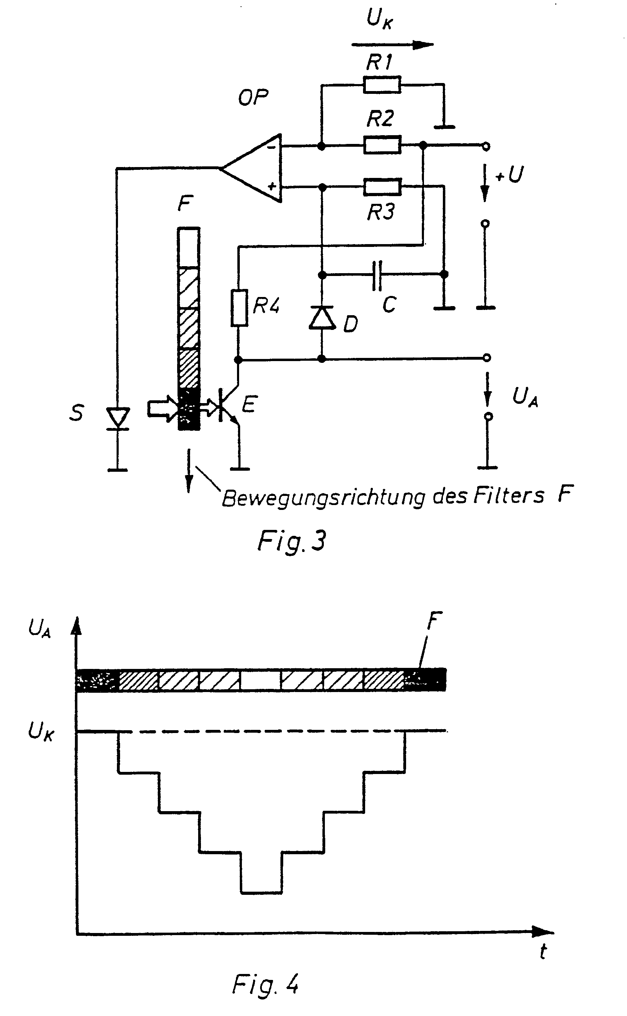

In Figur 3 ist der Ausgang eines Operationsverstärkers OP mit der Anode einer als optischen Sender vorgesehenen Leuchtdiode S verbunden, deren Kathode auf Bezugspotential liegt. Der invertierende Eingang des Operationsverstärkers OP liegt über einen ersten Widerstand R1 auf Bezugspotential und über einen zweiten Widerstand R2 an einer Spannung +U. Der nichtinvertierende Eingang des Operationsverstärkers OP liegt über eine Parallelschaltung aus einem dritten Widerstand R3 und aus einer Kapazität C auf Bezugspotential. Ausserdem ist der nichtinvertierende Eingang des Operationsverstärkers OP mit der Kathode einer Diode D verbunden, deren Anode über einen vierten Widerstand R4 an der Spannung +U liegt und mit dem Kollektor eines als optischen Empfänger vorgesehenen Phototransistors E verbunden ist. Der Emitter des Phototransistors E liegt auf Bezugspotential. Die Ausgangsspannung $U_A$ wird am Kollektor des Phototransistors E abgegriffen.

Anhand des in Figur 4 gezeigten Diagramms wird die Erfindung nun erläutert.

In Figur 4 ist die Ausgangsspannung $U_A$, die am Kollektor des Phototransistors E abgegriffen wird, in Abhängigkeit von den Grauwerten eines Filters F aufgetragen.

Zum leichteren Verständnis der Schaltungsanordnung aus Figur 3 sei angenommen, daß zuerst die Stufe des Filters F, die das Licht am stärksten dämpft, zwischen der Leuchtdiode S und dem Phototransistor E liegt. Wegen des Spannungsteilers aus dem ersten Widerstand R1 und dem zweiten Widerstand R2 hat das Potential am invertierenden Eingang des Operationsverstärkers OP einen festen Wert.

Der Operationsverstärker OP ändert nun seine Ausgangsspannung und damit auch die Sendeleistung der Leuchtdiode S so lange, bis die Spannung zwischen seinen beiden Eingängen null wird. Weil dann beide Eingänge des Operationsverstärkers OP auf gleichem Patential liegen, fällt an der Kapazität C ebenso wie am ersten Widerstand R1 die Klemmspannung $U_K$ ab. Unter der Annahme, daß es sich bei der Diode D um eine ideale Diode handelt, nimmt die Ausgangsspannung $U_A$ am Kollektor des Phototransistors E den Wert der Klemmspannung $U_K$ an, denn der Operationsverstärker OP ändert – wie bereits erwähnt – seine Ausgangsspannung und damit auch die Sendeleistung der Leuchtdiode S so lange, bis der Widerstand des Phototransistors E genau den Wert annimmt, bei dem an der Kollektor-Emitter-Strecke die Klemmspannung $U_K$ abfällt. Der Kollektor des Phototransistors E sowie der invertierende als auch der nichtinvertierende Eingang des Operationsverstärkers OP liegen jetzt alle auf gleichem Potential, vorausgesetzt die Diode D ist ein ideales Bauteil. In Wirklichkeit wird die Spannung an der Kollektor-Emitter-Strecke des Phototransistors E jedoch um die Diodenspannung kleiner sein als die Klemmspannung $U_K$.

Wird nun das Filter F zwischen der Leuchtdiode S und dem Phototransistor E so durchgeschoben, daß von Stufe zu Stufe des Filters F die Dämpfung abnimmt, so nimmt der Widerstand des Phototransistors E ebenfalls ab. Weil dadurch das Potential am Kollektor des Phototransistors E negativ gegenüber dem Potential an der Kathode der Diode D wird, sperrt die Diode D. Bei gesperrter Diode D kann aber der Operationsverstärker OP seine Ausgangsspannung nicht ändern, weil seine beiden Eingänge auf gleichem Potential liegen oder – mit anderen Worten ausgedrückt – weil sowohl am ersten Widerstand R1 als auch an der Kapazität C die Klemmspannung $U_k$ abfällt. Deshalb nimmt die Ausgangsspannung $U_A$, wie in Figur 4 gezeigt ist, stufenförmig ab, wenn die Dämpfung des Filters F ebenfalls in Stufen abnimmt. Wird das Filter F in entgegengesetzter Richtung, das heißt von der Stufe geringster Dämpfung zur Stufe höchster Dämpfung zwischen der Leuchtdiode S und dem Phototransistor E geschoben, so wird die in Figur 4 gezeigte Treppenkurve in entgegengesetzter Richtung durchlaufen : Die Ausgangsspannung $U_A$ nimmt stufenförmig zu, bis sie, wenn wieder die Stufe des Filters F mit der größten Dämpfung zwischen der Leuchtdiode D und dem Phototransistor E liegt, auf die Klemmspannung $U_K$ angestiegen ist.

Bei der Schaltungsanordnung aus Figur 3 wird stets auf die Stufe des Filters mit der größten Dämpfung, das heißt auf den Dunkelsten Wert geklemmt. Wird z.B. das Filter um eine Stufe mit noch größerer Dämpfung erweitert und wird diese Stufe zwischen die Leuchtdiode S und den Phototransistor E geschoben, so nimmt der Widerstand des Phototransistors E zu. Weil durch diese Zunahme das Potential an seinem Kollektor positiv gegenüber dem Potential an der Kathode der Diode D wird, wird die Diode D leitend. Das Potential am nichtinvertierenden Eingang des Operationsverstärkers OP steigt, denn die Kapazität C wird nun über die Diode D geladen. Die an der Kapazität C abfallende Spannung wird größer als die Klemmspannung $U_K$, während am ersten Widerstand R1 weiterhin die Klemmspannung $U_K$ abfällt. Der Operationsverstärker OP regelt sofort diesen Zustand unterschiedlicher Spannungen am ersten Widerstand R1 und an der Kapazität C aus, indem er seine Ausgangsspannung erhöht, so daß die Leuchtdiode S mehr Licht auf den Phototransistor E strahlt. Die Lichtleistung der Leuchtdiode S wird so lange erhöht, bis der Widerstand des Phototransistors E wieder den Wert annimmt, bei dem an der Kollektor-Emitter-Strecke die Klemmspannung $U_K$ abfällt. In diesem stabilen Zustand liegen der Kollektor des Phototransistors E sowie die beiden Eingänge des Operationsverstärkers OP auf gleichem Potential.

Wenn z.B. verschiedene periodisch wiederkehrende Helligkeiten mittels der beschriebenen Schaltungsanordnungen zu detektieren sind, wird bei der in Figur 1 gezeigten Schaltungsanordnung stets auf den hellsten Wert geklemmt, während bei der Schaltungsanordnung aus Figur 3 stets auf den dunkelsten Wert geklemmt wird. Änderungen der Parameter der Leuchtdiode S und des Phototransistors E infolge Temperaturschwankungen und infolge Alterung der Bauteile werden bei der Schaltungsanordnung aus der Figur 1 jedesmal bei Klemmen auf den hellsten Wert kompensiert, während sie bei der Schaltungsanordnung aus Figur 3 jedesmal beim Klemmen auf den dunkelsten Wert Kompensiert werden. Um einen großen Spannungshub zu erzielen, ist es sinnvoll, die Klemmspannung $U_K$ bei der Schaltungsanordnung aus der Figur 3 groß, dagegen bei der Schaltungsanordnung aus der Figur 1 klein zu wählen, Die beschriebenen Schaltungsanordnungen sind sowohl für Lichtschranken, bei denen der optische Sender und der optische Empfänger sich gegenüber liegen, als auch für Reflexkoppler geeignet.

So läßt sich z.B. die Erfindung vorteilhaft bei einem Videorecorder verhirklichen. Um eine saubere Bildwiedergabe zu erzielen, müssen Drehzahl und Winkellage der Kopftrommel eines Videorecorders genau geregelt werden. Deshalb sind auf dem Umfang des deckelförmigen Rotors des Kopftrommelmotors z.B. dunkle Striche gemalt, die zwischen dem Phototransistor E und der Leuchtdiode S wie bei einer Lichtschranke hindurchlaufen. Einer der Striche ist dicker als die restlichen Striche gewählt. Dieser Strich stellt den dunkelsten Wert dar, auf den geklemmt wird. Die Striche werden vom Photodetektor E detektiert, dessen Ausgangsspannung $U_A$ zur Ansteuerung der Statorspulen des Kopftrommelmotors dient.

**Ansprüche**

1. Verfahren zur Kompensation von Änderungen der Parameter eines optischen Senders (S) und eines optischen Empfängers (E) in einem optischen Abtaster, der unterschiedliche Helligkeiten detektiert und bei dem der optische Empfänger (E) Licht vom optischen Sender (S) empfängt, **dadurch gekennzeichnet**, daß die Ausgangsspannung ($U_A$) des optischen Empfängers (E), die von der empfangenen Lichtenergie abhängig ist, mit einer Referenzspannung ($U_K$) verglichen wird und daß zur Einstellung der Versorgungsspannung des optischen Senders (S) die Ausgangsspannung ($U_A$) des optischen Empfängers (E) auf die Referenzspannung ($U_K$) geklemmt wird, wenn die vom optischen Empfänger (E) empfangene Lichtenergie einen Extremwert annimmt.

2. Verfahren nach Anspruch 1, **dadurch gekennzeichnet**, daß die Ausgangsspannung ($U_A$) des optischen Empfängers (E) auf die Referenzspannung ($U_K$) geklemmt wird, wenn die vom optischen Empfänger (E) empfangene Lichtenergie den Maximalwert annimmt.

3. Verfahren nach Anspruch 1, **dadurch gekennzeichnet**, daß die Ausgangsspannung ($U_A$) des optischen Empfängers (E) auf die Referenzspannung ($U_K$) geklemmt wird, wenn die vom optischen Empfänger (E) empfangene Lichtenergie den Minimalwert annimt.

4. Schaltungsanordnung zur Durchführung des Verfahrens nach Anspruch 2, **dadurch gekennzeichnet**, daß der Ausgang eines Operationsverstäekers (OP) mit der einen Elektrode einer als optischen Sender (S) vorgesehenen Leuchtdiode verbunden ist, deren andere Elektrode auf Bezugspotential liegt, daß der Invertierende Eingang des Operationsverstärkers (OP) über einen ersten Widerstand (R1) auf Bezugspotential liegt und über einen zweiten Widerstand (R2) an einer Spannung +U liegt, daß der nichtinvertierende Eingang des Operationsverstärkers (OP) über einen dritten Widerstand (R3) an der Spannung +U und über eine Kapazität (C) auf Bezugspotential liegt, daß der nichtinvertierende eingang des Operationsverstärkres (OP) mit der Anode einer Diode (D) verbunden ist, deren Kathode über einen vierten Widerstand (R4) an der Spannung +U liegt und mit der einen Elektrode eines als optischen Empfänger vorgesehenen Phototransistors oder einer Photodiode (E) verbunden ist, daß die andere Elektrode des Phototransistors oder der Photodiode (E) auf Bezugspotential liegt und daß die Ausgangsspannung $U_A$ an der einen Elektrode des Phototransistors oder der Photodiode (E) abgegriffen wird.

5. Schaltungsanordnung zur Durchführung des Verfahrens nach Anspruch 3, **dadurch gekennzeichnet**, daß der Ausgang eines Operationsverstärkers (OP) mit der einen Elektrode einer als optischen Sender (S) vorgesehenen Leuchtdiode verbunden ist, deren andere Elektrode auf Bezugspotential liegt, daß der invertierende Eingang des Operationsverstärkers (OP) über einen ersten Widerstand (R1) auf Bezugspotential liegt und über einen zweiten Widerstand (R2) an einer Spannung +U liegt, daß der nichtinvertierende Eingang des Operationsverstärkers (OP) über eine Parallelschaltung aus einem dritten Widerstand (R3) und aus einer Kapazität (C) auf Bezugspotential liegt, daß der nichtinvertierende Eingang des Operationsverstärkers (OP) mit der Kathode einer Diode (D) verbunden ist, deren Anode über einen vierten Widerstand (R4) an der Spannung +U liegt und mit der einen Elektrode eines als optischen Empfänger vorgesehenen Phototransistors oder einer Photodiode (E) verbunden ist, daß die andere Elektrode des Phototransistors oder der Photodiode (E) auf Bezugspotential liegt und daß die Ausgangsspannung ($U_A$) an der einen Elektrode des Phototransistors oder der Photodiode (E) abgegriffen wird.

**Claims**

1. A method of compensating for changes of the parameters of an optical transmitter (S) and an optical receiver (E) in an optical scanner which detects different brightnesses and in which the optical receiver (E) detects light from the optical transmitter, characterised in that the output voltage ($U_A$) of the optical receiver (E), which depends on the light energy received, is compared with a reference voltage ($U_K$), and that for adjustment of the supply voltage of the optical transmitter (S) the output voltage ($U_A$) of the optical receiver (E) is clamped to the reference voltage ($U_K$) if the light energy received by the optical receiver (E) reaches an extreme value.

2. A method according to Claim 1, characterised in that the output voltage ($U_A$) of the optical receiver (E) is clamped to the reference voltage ($U_K$) if the light energy received by the optical receiver (E) reaches the maximum value.

3. A method according to Claim 1, characterised in that the output voltage ($U_A$) of the optical receiver (E) is clamped to the reference voltage ($U_K$) if the light energy received by the optical receiver (E) reaches the minimum value.

4. A circuit arrangement for carrying into effect the method according to Claim 2, characterised in that the output of an operational amplifier (OP) is connected to one electrode of a light-emitting diode constituting an optical transmitter (S), of which the other electrode is connected to reference potential, that the inverting input of the operational amplifier (OP) is connected to reference potential by way of a first resistance (R1) and to a voltage +U, by way of a second resistance (R2), that the non-inverting input of the operational amplifier (OP) is connected by way of a third resistance (R3) to the voltage +U and by way of a capacitance (C) to the reference potential, that the non-inverting input of the operational amplifier (OP) is connected to the anode of a diode (D) of which the cathode is connected by way of a fourth resistance (R4) to the voltage +U and is connected to one electrode of a phototransistor or photodiode (E) constituting an optical receiver, that the other electrode of the phototransistor or the photodiode (E) is at reference potential and that the output voltage UA is tapped off at the first-mentioned electrode of the phototransistor or photodiode (E).

5. A circuit arrangement for carrying the method according to Claim 3 into effect, characterised in that the output of an operational amplifier (OP) is connected to one electrode of a light-emitting diode constituting a light transmitter (E) of which the other electrode is at reference potential, that the inverting input of the operational amplifier (OP) is connected to reference potential by way of a first resistance (R1) and to a voltage +U by way of a second resistance (R2), that the non-inverting input of the operational amplifier (OP) is connected to reference potential by way of a parallel circuit consisting of a third resistance (R3) and a capacitance (C), that the non-inverting input of the operational amplifier (OP) is connected to a cathode of a diode (D) of which the anode is connected by way of a fourth resistance (R4) to the voltage +U and is connected to one electrode of a phototransistor or photodiode (E) constituting an optical receiver, that the other electrode of the phototransistor or photodiode (E) is at reference potential and that the output voltage ($U_A$) is tapped off at the first-mentioned electrode of the phototransistor or photodiode (E).

**Revendications**

1. Procédé de compensation des variations des paramètres d'un émetteur optique (S) et d'un récepteur optique (E) d'un détecteur optique détectant différentes luminosités et dans lequel le récepteur optique (E) reçoit de la lumière émise par l'émetteur optique (S), caractérisé en ce que la tension de sortie ($U_A$) du récepteur optique (E) qui est fonction de l'énergie lumineuse reçue est comparée à une tension de référence ($U_K$) et que, pour régler la tension d'alimentation de l'émetteur optique (S), la tension de sortie ($U_A$) du récepteur optique (E) est reliée à la tension de référence ($U_K$) lorsque l'énergie lumineuse reçue par le récepteur optique (E) atteint une valeur extrême.

2. Procédé selon la revendication 1, caractérisé en ce que la tension de sortie ($U_A$) du récepteur optique (E) est reliée à la tension de référence ($U_K$) lorsque l'énergie lumineuse reçue par le récepteur optique (E) atteint une valeur maximale.

3. Procédé selon la revendication 1, caractérisé en ce que la tension de sortie ($U_A$) du récepteur optique (E) est reliée à la tension de référence ($U_K$) lorsque l'énergie lumineuse reçue par le récepteur optique (E) atteint une valeur minimale.

4. Circuit pour la mise en oeuvre du procédé selon la revendication 2, caractérisé en ce que la sortie d'un amplificateur opérationnel (OP) est reliée à l'une des électrodes d'une diode lumineuse prévue en tant qu'émetteur optique (S) à l'autre électrode de laquelle est appliqué le potentionl de référence, qu'à l'entrée inverseuse de l'amplificateur opérationnel (OP) est appliqué le potentiel de référence à travers une première résistance (R1) et une tension +U à travers une deuxième résistance (R2), qu'à l'entrée non inverseuse de l'amplificateur opérationnel (OP) est appliquée la tension +U à travers une troisième résistance (R3) et le potentiel de référence à travers un condensateur (C), que l'entrée non inverseuse de l'amplificateur opérationnel (OP) est reliée à l'anode d'une diode (D) dont la cathode, à laquelle est appliquée la tension +U à travers une quatrième résistance (R4), est reliée à une première électrode d'un phototransistor prévu en tant que récepteur optique ou d'une photodiode (E), qu'à l'autre électrode du phototransistor ou de la photodiode (E) est appliqué le potentiel de référence et que la tension de sortie ($U_A$) est prélevée à la première électrode du phototransistor ou de la photodiode (E).

5. Circuit pour la mise en oeuvre du procédé selon la revendication 3, caractérisé en ce que la sortie d'un amplificateur opérationnel (OP) est reliée à l'une des électrodes d'une diode lumineuse prévue en tant qu'émetteur optique (S) à l'autre électrode de laquelle est appliqué le potentionl de référence, qu'à l'entrée inverseuse de l'amplificateur opérationnel (OP) est appliqué le potentiel de référence à travers une première résistance (R1) et une tension +U à travers une deuxième résistance (R2), qu'à l'entrée non inverseuse de l'amplificateur opérationnel (OP) est appliqué le potentiel de référence à travers une troisième résistance (R3) et un condensateur (C) montés en parallèle, que l'entrée non inverseuse de l'amplificateur opérationnel (OP) est reliée à la cathode d'une diode (D) dont l'anode, à laquelle est appliquée la tension +U à travers une quatrième résistance (R4), est reliée à une première électrode d'un phototransistor prévu en tant que récepteur optique ou d'une photodiode (E), qu'à l'autre électrode du phototransistor ou de la photodiode (E) est appliqué le potentiel de référence et que la tension de sortie ($U_A$) est prélevée à la première électrode du phototransistor ou de la photodiode (E).

Fig. 1

Fig. 2

Fig. 3

Bewegungsrichtung des Filters F

Fig. 4